**Europäisches Patentamt**

**European Patent Office**

**Office européen des brevets**

(19)

(11) Veröffentlichungsnummer: **0 060 490**
**A2**

(12) **EUROPÄISCHE PATENTANMELDUNG**

(21) Anmeldenummer: **82101839.7**

(22) Anmeldetag: **09.03.82**

(51) Int. Cl.³: **A 01 G 9/00**

(30) Priorität: **12.03.81 DE 8107000 U**

(43) Veröffentlichungstag der Anmeldung: **22.09.82**
**Patentblatt 82/38**

(84) Benannte Vertragsstaaten: **AT BE CH DE FR GB IT LI LU NL SE**

(71) Anmelder: **Paul Dahm Bimsbaustoffwerke, Mittelweg 1, D-5450 Neuwied (DE)**

(72) Erfinder: **Dose, Horst-Peter, Ing. grad., Fahrerstrasse 2, D-5450 Neuwied (DE)**
Erfinder: **Pyra, Johannes, Am Tannenbusch 9, D-5462 Bad Hönningen (DE)**

(74) Vertreter: **Arentoft, Holger, Gartenstrasse 18, D-5461 Kasbach-Ohlenberg (DE)**

(54) **Blumenkübel.**

(57) Ein Blumenkübel als Bauelement für Kübelgruppen und Kübelreihen, insbesondere zur Aufstellung auf städtischen Plätzen, in Fußgängerzonen, in verkehrsberuhigten Spielstraßen, als Mittelinsel eines Verkehrskreises u.dgl., aber auch für private Gärten und Auffahrten und als Böschungsstützen.

Der Blumenkübel weist zwei einander gegenüberliegende konvexe und zwei konkave Seitenwände auf. Zumindest die beiden konkaven Kübelseitenwände sind kreiszylindrisch; an diese Wände sind kreiszylindrische Blumenkübel mit gleichem Radius aufstellbar, wobei jeweils kreismantelförmige Anlageflächen entstehen.

Die Zusammenstellung des konvex-konkaven Blumenkübels mit einem oder zwei Blumenkübeln kreiszylindrischen Querschnitts ist gelenkähnlich. Eine Kübelreihe aus wechselweise konvex-konkaven und zylindrischen Blumenkübeln kann daher jede beliebige Linienführung aufweisen, vom Zickzack bis zum Vieleck, Kreis oder Ellipse, sie kann aber auch geradlinig verlaufen.

Die zylindrischen Anlageflächen der unmittelbar benachbarten Blumenkübeln stellen eine «nahtlose» Verbindung der Kübel untereinander dar, die bei Kübeln mit gerundeten Seitenwänden bisher nicht möglich war.

Darüber hinaus bietet eine aus konvex-konkaven und zylindrischen Blumenkübeln zusammengestellte Kübelreihe einen besonders lebendigen und reizvollen Anblick.

– 1 –

Beschreibung

Die Erfindung betrifft einen bewegbaren Blumenkübel als
Bauelement für Kübelgruppen und Kübelreihen, insbesondere
zur Aufstellung auf städtischen Plätzen, in Fußgängerzonen, in verkehrsberuhigten Spielstraßen, als Mittelinsel eines Verkehrskreisels u. dgl., aber auch für private Gärten und Auffahrten und als Böschungsstützen.

Solche Blumenkübel mit oder ohne Kübelboden sind im
Prinzip bekannt und werden in verschiedenen Größen und
Ausführungen auf dem Markt angeboten. Sie sind meist aus
Beton oder Waschbeton gefertigt, je nach Größe mit oder
ohne Armierung. Ihr offener Querschnitt bildet üblicherweise ein Quadrat oder ein längliches Viereck, manchmal
aber auch einen Kreis oder eine Ellipse.

Wenn solche Blumenkübel mit anderen gleichen oder unterschiedlichen Blumenkübeln zusammengestellt werden, regt
sich oft - jedenfalls bei den oben genannten öffentlichen
Verwendungen - der Wunsch, dann und wann die Zusammenstellung zu ändern, sei es, um ein günstigeres Straßenbild zu gestalten, sei es, weil mit der Zeit die Erfahrung gelehrt hat, wie die Verkehrsströme besser anders
zu lenken und die Verkehrsräume günstiger auszunutzen
sind, sei es, einfach um etwas Neues zu bringen. Insbesondere das letztere Argument wird im privaten Bereich
sicherlich oft eine Rolle spielen.

Bei viereckigen Blumenkübeln sind die Möglichkeiten, durch Lageänderung das Gesamtbild anders zu gestalten, gering, insbesondere wenn die Blumenkübel in ungebrochenen Reihen aufzustellen sind. In diesem Falle ist lediglich entweder die Aufstellung Fläche an Fläche oder Ecke an Ecke möglich. Bei der Aufstellung Ecke an Ecke findet eine Berührung praktisch nur über eine Linie statt. Es ist bekannt geworden, Blumenkübel mit dem Querschnitt eines regelmäßigen Sechsecks auszubilden; durch diese Maßnahme sind die Aufstellungsmöglichkeiten aneinander anliegender Blumenkübel etwas verbessert, jedoch nur dann, wenn es sich um gleich große Blumenkübel handelt. Zudem ist wegen der Armierung die Herstellung sechseckiger Betonkübel recht aufwendig. Solche Kübel weisen jedoch den Vorteil auf, relativ breitflächig aufeinander anzuliegen.

Beliebig aufstellbar in beliebig ausgerichteten Reihen sind nur Blumenkübel kreis- oder ellipsenförmigen Querschnitts. Weil eine Reihe aneinander anliegender rohrförmiger Blumenkübel einen einförmigen – "langweiligen" – Anblick bietet, werden Reihenaufstellungen solcher Kübel recht selten gesehen. Auch berühren sie sich lediglich an Mantellinien.

Die vorliegende Erfindung hat zum Ziel, einen Blumenkübel der eingangs besagten Art zu schaffen, der selbst nicht rohrzylinderförmig ist, der aber entweder an zylinderförmigen Wänden breitflächig an gleichen Blumenkübeln anliegt oder in breitflächiger Auflage an bekannten rohrzylinderförmigen Kübeln Reihen beliebig variabler Linienführung zu bilden imstande ist. Solche Kübelreihen oder Kübelgruppen sollen mit der vorgesehenen Anpflanzung ein reizvolles Gesamtbild bieten, das durch Änderung der Linienführung jederzeit mühelos umgestellt werden kann. Darüber hinaus soll der erfindungsgemäße Blumenkübel einfach und leicht herstellbar sein.

Diese Erfindungsaufgabe wird dadurch gelöst, daß der erfindungsgemäße Blumenkübel vier paarweise einander schneidende zylindrische Seitenwände aufweist, von denen zwei einander gegenüber liegende vom Kübelmittelpunkt gesehen konvex verlaufen, während die beiden anderen Kübelwände gegenüber dem Kübelmittelpunkt konkave Zylinderflächen bilden, wobei gedachte Verlängerungen der Zylinderebenen des konkaven Zylinderflächenpaares sich in einer Ebene schneiden, welche die Zylinderachsen der des konkaven Zylinderflächenpaares bildenden Zylinderflächen verbindet. Dabei können die Zylinderflächen vorteilhafterweise Kreiszylinderflächen sein.

In einer bevorzugten Ausführungsform der Erfindung bilden die Zylinderachsen der kreiszylindrisch gestalteten Kübelwänden in einem Horizontalschnitt gesehen ein schiefes Viereck, in welchem die Diagonale zwischen den Zylinderachsen der konkaven Kübelwände stets länger ist als die Diagonale zwischen den Zylinderachsen der konvexen Kübelwände.

Anhand der Zeichnungen wird in der Folge ein Ausführungsbeispiel der Erfindung dargestellt und erläutert. Es zeigen :

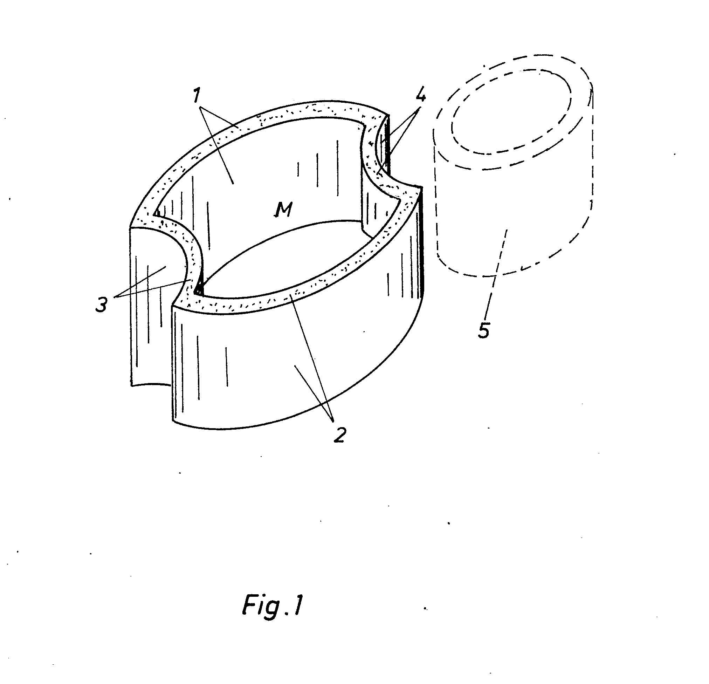

Figur 1      einen erfindungsgemäßen Blumenkübel in perspektivischer Sicht; ein bekannter zylinderrohrförmiger Blumenkübel entsprechender Größe ist gestrichelt angedeutet,

—4—

| Figur 2 | eine Gruppe von Blumenkübeln Figur 1, zu einer unregelmäßigen Reihe zusammengestellt, in einer Draufsicht, |
|---|---|
| Figur 3 | einen Blumenkübel Figur 1, in einer Draufsicht, von zwei gestrichelt angedeuteten bekannten zylinderrohrförmigen Blumenkübeln flankiert |
| Figur 4 | die Draufsicht einer Gruppe von Blumenkübeln Figur 1, mit bekannten zylinderrohrförmigen Blumenkübeln in einer unregelmäßigen Reihe angeordnet. |

Die Bezugsziffern auf den Figuren zeigen an :

| 1,2 | konvexe Kübelwände |
|---|---|
| 3,4 | konkave Kübelwände |
| 5 | zylinderrohrförmiger Blumenkübel |
| 6,7 | Zylinderachsen der konkaven Kübelwände 3,4 |
| 8,9 | Zylinderachsen der konvexen Kübelwände 1,2 |
| 10 | Diagonale zwischen den Zylinderachsen 6,7 |
| 11 | Diagonale zwischen den Zylinderachsen 8,9 |

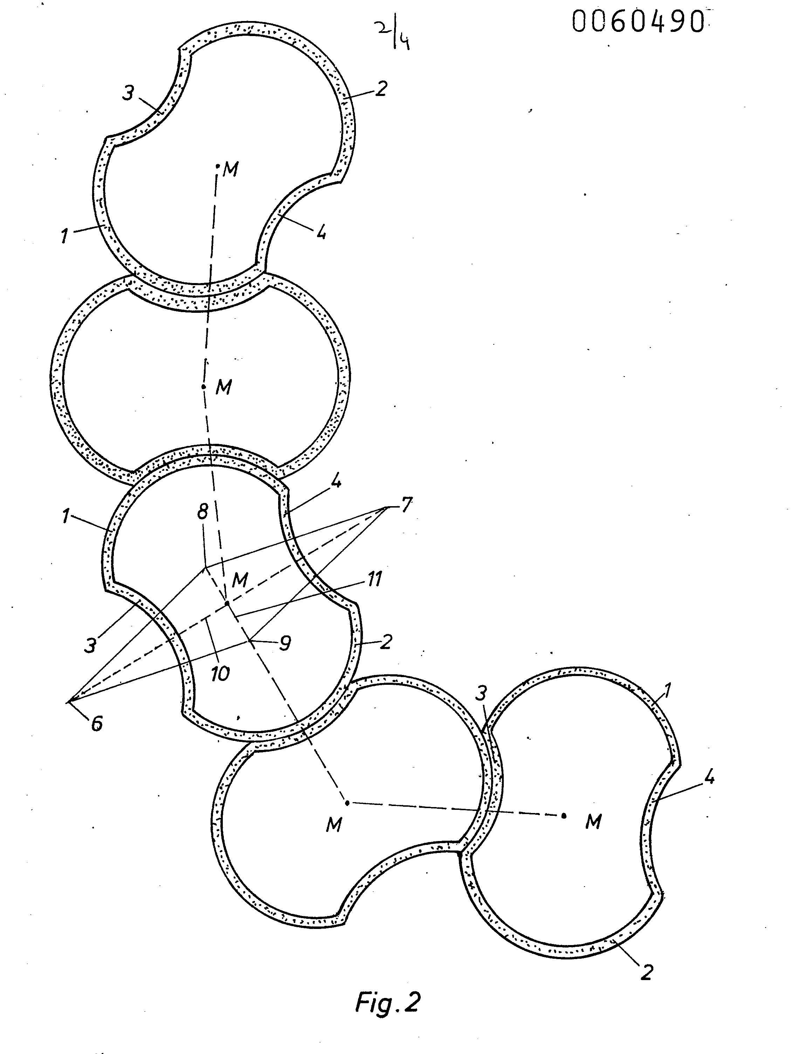

Von der Kübelmitte  M  heraus gesehen weist der Blumenkübel  Fig.1 zwei konvexe Kübelwände 1,2 und zwei konkave Kübelwände 3,4 auf und ist aus Sichtbeton mit Armierung gefertigt. Selbstverständlich können auch andere geeignete Materialien verwendet werden. Neben dem
erfindungsgemäßen Blumenkübel 1 bis 4 zeigt Figur 1
einen gestrichelt angedeuteten bekannten rohrförmigen
Blumenkübel 5, dessen Zylinderwand der konkaven Kübelwand 4 entspricht. Die Wände des im Ausführungsbeispiel beschriebenen Blumenkübels sind um Zylinderachsen 6 bis 9 kreiszylindrisch ausgebildet, wobei die
Zylinderachsen in einem Horizontalschnitt gesehen ein
schiefes Viereck bilden (Figur 2), in welchem die Diagonale 10 zwischen den Zylinderachsen 6,7 der konkaven
Kübelwände 1,2 stets länger ist als die Diagonale 11
zwischen den Zylinderachsen 8,9 der konvexen Kübelwände.

Dieses Merkmal ist für die Gestaltung des erfindungsgemäßen Blumenkübels von großer Bedeutung. Bei einem
Längenverhältnis um 3:2 der Diagonale ergibt sich ein
optisch schöner, relativ langgestreckter Blumenkübel,
der besonders geeignet ist, zusammen mit bekannten rohrförmigen Blumenkübeln aufgestellt zu werden (vgl. Figuren 1, 3 und 4), während Längenverhältnisse um 4:1 breitere Blumenkübel erbringen, die ohne Zwischenschalten
rohrförmiger Kübel imstande sind, miteinander reizvolle
Kübelgruppen zu bilden.

Figur 2 zeigt eine Zusammenstellung von Blumenkübeln 1
bis 4, bei denen das Verhältnis der Diagonalen 10,11
etwa 9:2 beträgt. Wie auf der Figur dargestellt, passen sich die Blumenkübel über die zylindrischen Wandflächen unmittelbar aneinander an, wobei die Mittelpunkte M eine willkürliche Kurve darstellen. Es liegt also in der Hand des Gestalters, mit einer Anzahl gleicher Blumenkübel eine Vielfalt von Kübelgruppen aufzustellen und ihren Gesamtanblick beliebig zu variieren. Dabei schließen sich die einzelnen Kübel breitflächig aneinander an.

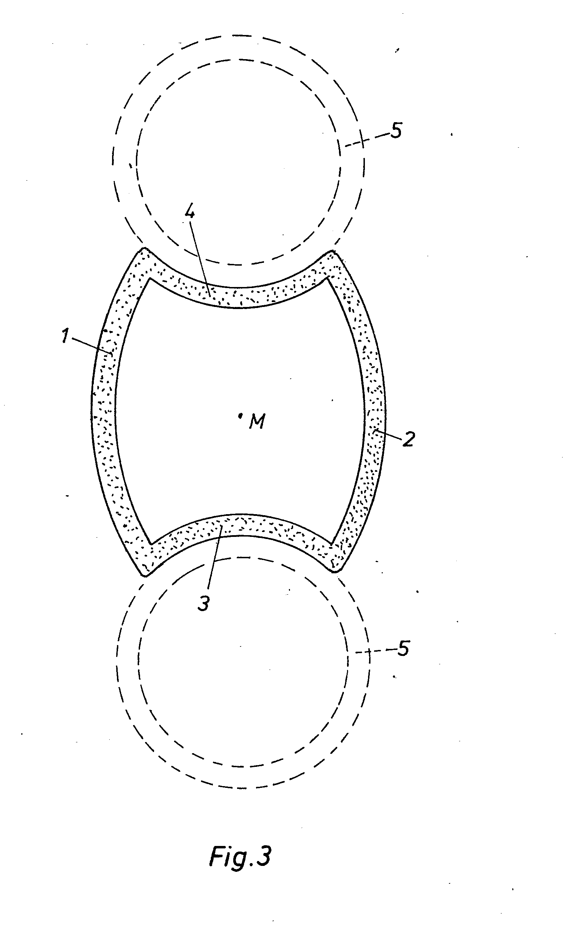

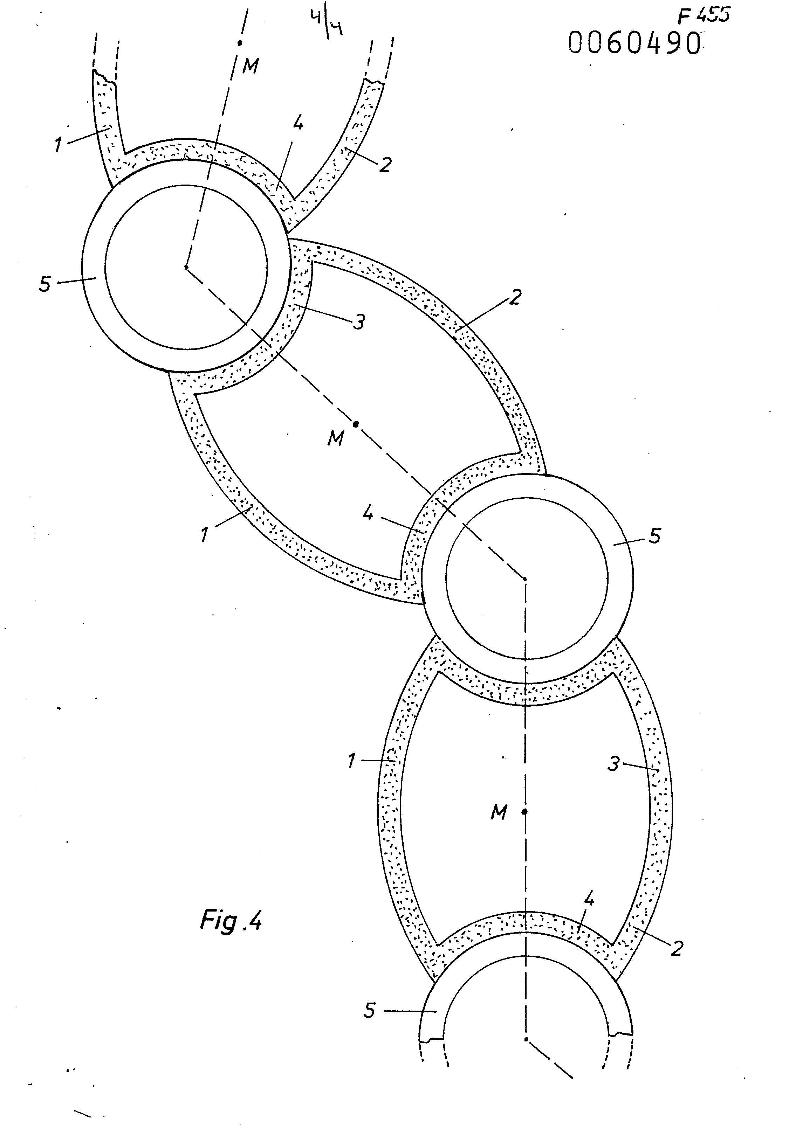

Auf Figur 3 ist dargestellt, wie ein Blumenkübel 1 bis 4 von zylinderrohrförmigen bekannten Blumenkübeln 5 flankiert werden kann, indem diese breitflächig an den erfindungsgemäßen Blumenkübel anliegen. Der Blumenkübel weist hier, wie der Kübel Figur 1, ein Diagonalverhältnis etwa 3:2 auf. Wie Figur 4 zeigt, kann man auch in dieser Zusammensetzung eine Kübelgruppe oder Kübelreihe gestalten, deren Kübelmittelpunkte M eine fast beliebige Kurve bilden. Die hierbei zustande gekommene Kübelgruppe stellt eine kompakte und über breitflächige Anlageflächen nahtlos zusammengestellte Einheit dar, ein Ergebnis, das bei zylinderwandigen Blumenkübeln bisher nicht erreichbar gewesen ist, sondern den als sechs- oder achtseitigen Betonprismen gestalteten Blumenkübeln vorbehalten war, die herstellungsmäßig aufwendig und im Verbund langweilig anzusehen sind. Dabei bietet eine solche "gemischte" Gruppe einen optisch sehr reizvollen Anblick.

Für die Anmelderin:

Holger Arentoft
Patentanwalt

· P a t e n t a n s p r ü c h e

1. Blumenkübel als Bauelement für Kübelgruppen und Kübelreihen, insbesondere zur Aufstellung auf städtischen Plätzen, in Fußgängerzonen, in verkehrsberuhigten Spielstraßen, als Mittelinsel in Verkehrskreiseln u.dgl., aber auch für private Gärten und Auffahrten,

dadurch gekennzeichnet, daß der Blumenkübel vier paarweise einander schneidende, zylindrisch gestaltete Seitenwände (1 bis 4) aufweist, von denen zwei einander gegenüberliegende Seitenwände (1,2) vom Kübelmittelpunkt (M) heraus gesehen konvex verlaufen, während die beiden anderen Kübelwände (3,4) gegenüber dem Kübelmittelpunkt konkave Zylinderflächen bilden, wobei gedachte Verlängerungen der Zylindermänteln des konvexen Zylinderflächenpaares (1,2) sich in einer Ebene schneiden, welche die Zylinderachsen (6,7) der konkaven Zylinderwände (3,4) verbindet.

2. Blumenkübel nach Anspruch 1, dadurch gekennzeichnet, daß die Zylinderwände (1 bis 4) Kreiszylinderflächen darstellen.

3. Blumenkübel nach Ansprüchen 1 und 2, dadurch gekennzeichnet, daß die Zylinderachsen (6 bis 9) der kreiszylindrisch gestalteten Kübelwände (1 bis 4) in einem Horizontalschnitt gesehen ein schiefes Viereck bilden, in welchem die Diagonale zwischen den Zylinderachsen (6,7) der konkaven Kübelwände (3,4) stets länger ist als die Diagonale zwischen den Zylinderachsen (8,9) der konvexen Kübelwände (1,2).

Fig.1

Fig.2

0060490

P455
0060490

Fig.3

F 455
0060490

4/4

Fig. 4